# EUROPEAN PATENT APPLICATION

(11) **EP 4 513 349 A1**
(43) Date of publication of application: **26.02.2025**
(21) Application number: 23213510.3
(22) Date of filing: 30.11.2023
(51) Int. Cl.: G06F 16/215, G06F 16/25

(54) **DATA PROCESSING METHOD AND APPARATUS, COMMUNICATION DEVICE, STORAGE MEDIUM, AND VEHICLE**

(30) Priority: 22.08.2023 CN 202311062139
(71) Applicant: Chongqing Changan Automobile Co., Ltd., Chongqing 400023 (CN)
(72) Inventor: YAO, Jieyu, Chongqing, 400023 (CN); WANG, Maolin, Chongqing, 400023 (CN); LI, Jie, Chongqing, 400023 (CN); HE, Gang, Chongqing, 400023 (CN); YI, Gang, Chongqing, 400023 (CN)
(74) Representative: Schulz Junghans Patentanwälte PartGmbB

(57) **Abstract**

Provided are a data processing method and apparatus, a communication device, a storage medium, and a vehicle. The data processing method includes: obtaining, according to table fields in a preset service detail table, industrial signal data corresponding to the table fields; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. The target industrial signal data that meets a requirement and quality is retained by screening the industrial signal data, and the target industrial signal data is aggregated according to the seconds time, which can cull out redundant data in a plurality of pieces of data per second, so that valid data can be retained, and redundant unrelated and invalid data can be eliminated; the overall data granularity retention is improved; and a less-for-more data service requirement is met.

## Description

### Field of the Invention

The present disclosure relates to the technical field of big data processing, and in particular, to a data processing method and apparatus, a communication device, a storage medium, and a vehicle.

### Background of the Invention

With the development of industrial big data, there is a daily increasing demand for intelligent services and development in various industries, especially in the field of industrial devices. For example, with the gradual improvement of an intelligent Internet of Vehicles technology, users have requirements not only for the driving performance of vehicles, but also for the comfort level, functional adaptability, cabin intelligence, intelligent human-vehicle interaction, intelligent driving, and other fields of the vehicles. During implementation of the above functions, a large amount of vehicle-related data needs to be collected by the vehicles and transmitted back to an automobile company for processing backup.

However, in the prior art, during implementation of industrial signal data transmission and processing, for example, full data uploaded by industrial intelligent big data acquisition signals such as a vehicle controller area network (CAN) signal includes multiple pieces of invalid data and occupies a large space, so that a load on a big data cluster is extremely high, which affects subsequent data analysis processing and causes a failure of calling or occupying a large quantity of computing resources in a timely manner.

### Summary of the Invention

A first objective of the present disclosure is to provide a data processing method to solve the problems in the prior art of a large number of pieces of invalid data and a large occupied space due to a large storage volume uploaded by industrial intelligent big data acquisition signals. A second obj ective is to provide a data processing apparatus. A third objective is to provide a communication device. A fourth objective is to provide a storage medium. A fifth objective is to provide a vehicle.

In order to achieve the above objectives, the present disclosure adopts the following technical solutions:
A first aspect implemented in the present application first provides a data processing method. The data processing method includes:
obtaining, according to table fields in a preset service detail table, industrial signal data corresponding to the table fields, where the industrial signal data is obtained from full industrial signal data uploaded by a preset industrial device to a preset cloud;
screening the industrial signal data to obtain target industrial signal data;
aggregating the target industrial signal data according to seconds time corresponding to the target industrial signal data to obtain aggregated industrial signal data; and
determining, according to the aggregated industrial signal data, aggregated industrial signal data corresponding to the table fields in the preset service detail table.

Further, the aggregating the target industrial signal data according to seconds time corresponding to the target industrial signal data to obtain aggregated industrial signal data includes:
aggregating all the industrial signal data according to the seconds time corresponding to the target industrial signal data and different signal codes corresponding to the target industrial signal data to obtain the aggregated industrial signal data.

Further, the signal codes are classified according to functional categories corresponding to the target industrial signal data.

Further, the aggregating all the industrial signal data according to the seconds time corresponding to the target industrial signal data and different signal codes corresponding to the target industrial signal data to obtain the aggregated industrial signal data includes:
aggregating all the target industrial signal data according to the seconds time corresponding to the target industrial signal data to obtain a main table, where the main table includes a unique device identifier and a seconds time field;
aggregating all the target industrial signal data according to the different signal codes corresponding to the target industrial signal data and the seconds time to obtain subtables corresponding to the target industrial signal data corresponding to the different signal codes, where the subtables include the unique device identifier, the seconds time field, and the aggregated industrial signal data corresponding to the table fields; and
aligning the main table with at least one of the subtables to obtain an event detail table, where the event detail table includes the aggregated industrial signal data.

Further, the aggregating all the target industrial signal data according to the different signal codes corresponding to the target industrial signal data and the seconds time to obtain subtables corresponding to the target industrial signal data corresponding to the different signal codes includes:
classifying all the target industrial signal data according to the signal codes to obtain a plurality of pieces of the target industrial signal data corresponding to the different signal codes; and
in a case that it is detected that a second piece of target industrial signal data corresponding to any signal code in the same seconds time field is a non null value and a first piece of target industrial signal data is a null value, or in a case that a second piece of target industrial signal data corresponding to the same signal code in the same seconds time field is a null value and a first piece of target industrial signal data is a non null value, aggregating the non null value corresponding to the first piece of target industrial signal data and the non null value corresponding to the second piece of target industrial signal data according to the seconds time to obtain the subtables corresponding to the target industrial signal data corresponding to the signal code, where the subtables include the signal code, a unique vehicle identifier, the seconds time field, and a data field.

Further, the classifying all the target industrial signal data according to the signal codes to obtain a plurality of pieces of the target industrial signal data corresponding to the different signal codes includes:
classifying all the target industrial signal data according to the signal codes to obtain a plurality of groups of target industrial signal data, where each group of target industrial signal data corresponds to one signal code; and
selecting, from each group of target industrial signal data, the first piece of target industrial signal data or the last piece of target industrial signal data sequenced on the basis of milliseconds time as the target industrial signal data corresponding to the different signal codes.

Further, the aligning the main table with at least one of the subtables to obtain an event detail table includes:
aligning the unique device identifier and seconds time field in the main table with the unique device identifier and seconds time field in the subtable to obtain the event detail table.

Further, the obtaining, according to table fields in a preset service detail table, industrial signal data corresponding to the table fields includes:
receiving a service function instruction sent by a user;
generating the preset service detail table according to the service function instruction, where the preset service detail table includes the table fields; the table fields include seconds time fields and data fields; one seconds time field corresponds to a plurality of data fields; and
obtaining, according to the data fields from a preset acquisition signal matrix, industrial signal data corresponding to the data fields, wherein one data field corresponds to at least one piece of industrial signal data.

Further, the screening the industrial signal data to obtain target industrial signal data includes:
screening the industrial signal data according to a preset screening rule to obtain the target industrial signal data.

Further, the preset screening rule includes: a value corresponding to the industrial signal data is a non null value, and a frequency corresponding to the industrial signal data is greater than a target threshold.

Further, the seconds time is captured from a milliseconds time character string corresponding to the industrial signal data and corresponds to a seconds unit.

Another aspect implemented by the present disclosure further provides a data processing apparatus. The data processing apparatus includes:
an obtaining module, configured to obtain, according to table fields in a preset service detail table, industrial signal data corresponding to the table fields, where the industrial signal data is obtained from full industrial signal data uploaded by a preset industrial device to a preset cloud;
a screening module, configured to screen the industrial signal data to obtain target industrial signal data;
an aggregation module, configured to aggregate the target industrial signal data according to seconds time corresponding to the target industrial signal data to obtain aggregated industrial signal data; and
a determination module, configured to determine, according to the aggregated industrial signal data, aggregated industrial signal data corresponding to the table fields in the preset service detail table.

Further, the aggregation module includes:
a first aggregation sub-module, configured to aggregate all the industrial signal data according to the seconds time corresponding to the target industrial signal data and different signal codes corresponding to the target industrial signal data to obtain the aggregated industrial signal data, where the signal codes are signal channels corresponding to the target industrial signal data.

The first aggregation sub-module includes:
a first aggregation unit, configured to aggregate all the target industrial signal data according to the seconds time corresponding to the target industrial signal data to obtain a main table, where the main table includes a unique device identifier and a seconds time field;
a second aggregation unit, configured to aggregate all the target industrial signal data according to the different signal codes corresponding to the target industrial signal data and the seconds time to obtain subtables corresponding to the target industrial signal data corresponding to the different signal codes, where the subtables include the unique device identifier, the seconds time field, and the aggregated industrial signal data corresponding to the table fields; and
an alignment unit, configured to align the main table with at least one of the subtables to obtain an event detail table, where the event detail table includes the aggregated industrial signal data.

Further, the second aggregation sub-module includes:
a classification subunit, configured to classify all the target industrial signal data according to the signal codes to obtain a plurality of pieces of the target industrial signal data corresponding to the different signal codes; and
an aggregation subunit, configured to: in a case that it is detected that a second piece of target industrial signal data corresponding to any signal code in the same seconds time field is a non null value and a first piece of target industrial signal data is a null value, or in a case that a second piece of target industrial signal data corresponding to the same signal code in the same seconds time field is a null value and a first piece of target industrial signal data is a non null value, aggregate the non null value corresponding to the first piece of target industrial signal data and the non null value corresponding to the second piece of target industrial signal data according to the seconds time to obtain the subtables corresponding to the target industrial signal data corresponding to the signal code, where the subtables include the signal code, the unique device identifier, the seconds time field, and a data field.

Further, the alignment unit includes:
an alignment subunit, configured to align the unique device identifier and seconds time field in the main table with the unique device identifier and seconds time field in the subtable to obtain the event detail table.

Further, the obtaining module includes:
a receiving sub-module, configured to receive a service function instruction sent by a user;
a generation sub-module, configured to generate the preset service detail table according to the service function instruction, where the preset service detail table includes the table fields; the table fields include seconds time fields and data fields; one seconds time field corresponds to a plurality of data fields; and
an obtaining sub-module, configured to obtain, according to the data fields from a preset acquisition signal matrix, industrial signal data corresponding to the data fields, where one data field corresponds to at least one piece of industrial signal data.

Further, the screening module includes:
a screening sub-module configured to screen the industrial signal data according to a preset screening rule to obtain the target industrial signal data.

Further, the preset screening rule includes: a value corresponding to the industrial signal data is a non null value, and a frequency corresponding to the industrial signal data is greater than a target threshold.

Further, the seconds time is captured from a milliseconds time character string corresponding to the industrial signal data and corresponds to a seconds unit.

A further aspect implemented in the present application further provides a communication device, including a processor, a communication interface, a memory, and a communication bus, where the processor, the communication interface, and the memory complete mutual communications through the communication bus.

The memory is configured to store a computer program; and
the processor is configured to execute the program stored on the memory to implement any one of the data processing methods described above.

Another aspect implemented in the present application further provides a computer-readable storage medium. The computer-readable storage medium stores instructions. The instructions, when run on a computer, cause the computer to perform any one of the data processing methods described above.

Yet another aspect implemented in the present disclosure further provides a vehicle. The vehicle includes any one of the data processing apparatuses described above.

Beneficial effects of the present disclosure are as follows:
The data processing method provided by the embodiments of the present application includes: obtaining, according to table fields in a preset service detail table, industrial signal data corresponding to the table fields, where the industrial signal data is obtained from full industrial signal data uploaded by a preset industrial device to a preset cloud; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. That is, by screening the acquired industrial signal data, the present application can preliminarily optimize original full data and retain the industrial signal data that meets a requirement and quality, and the target industrial signal data is further aggregated according to the seconds time to obtain the aggregated industrial signal data, which can cull out redundant data in a plurality of pieces of data per second, so that valid data can be retained, and redundant unrelated and invalid data can be eliminated; the overall data granularity retention is improved; and a less-for-more data service requirement is met.

### Brief Description of the Drawings

In order to describe the technical solutions of the embodiments of the present application or in the prior art more clearly, the following will briefly describe the accompanying drawings required for describing the embodiments or the prior art.
FIG. 1 is a flowchart I of steps of a data processing method according to an embodiment of the present application;
FIG. 2 is a flowchart II of steps of a data processing method according to an embodiment of the present application;
FIG. 3 is a flowchart III of steps of a data processing method according to an embodiment of the present application;
FIG. 4 is a structural block diagram of a data processing apparatus according to an embodiment of the present application;
FIG. 5 is a structural block diagram of a communication device according to an embodiment of the present application;
FIG. 6 is a schematic diagram of obtaining industrial signal data in data processing according to an embodiment of the present application;
FIG. 7 is a schematic diagram of screening industrial signal data in data processing according to an embodiment of the present application; and
FIG. 8 is a step flowchart of step 203 in the flowchart II of the data processing method of FIG. 2 according to an embodiment of the present application.

### Detailed Description of the Embodiments

The technical solutions in the embodiments of the present application are described below with reference to the accompanying drawings in the embodiments of present application.

To make the objectives, technical solutions, and advantages of the embodiments of the present application clearer, the following will describe the various implementations of the present application in detail with reference to the accompanying drawings. However, those of ordinary skill in the art can understand that in the various implementations of the present application, numerous technical details are set forth in order to enable readers to better understand the present application. However, the technical solutions claimed by the present application can also be implemented even without these technical details and the various changes and modifications based on the following implementations. The classification of the following embodiments is for convenience of description and should not constitute any limitation on the specific implementations of the present application. The various embodiments can be combined and referenced to each other without contradictions.

It should be noted that the embodiments of the present application can be applied to a big data processing center or a big data cluster center. The big data cluster center can be subsequently developed through a data processing method in the embodiments of the present application. For example, processed aggregated industrial signal data can be applied to data analysis, artificial intelligence research, initial model optimization, and the like.

In order to facilitate a person skilled in the art to understand the technical solutions of the present application, the embodiments of the present application will be illustrated by taking a commonly used signal, namely, a CAN signal, for vehicle transmission among industrial signals as an example. Through data processing performed on a CAN signal transmitted back by an existing vehicle, it is found that the same functional information may be uploaded by different CAN signals. Frequencies of uploading data by different CAN signals are different, but most of the frequencies are in milliseconds. The uploading of the CAN signal data carries a large amount of invalid information such as null values. In a daily data analysis requirement, there are few requirements for millisecond accuracy of information such as speed, mileage, energy consumption, and energy reserve. Moreover, an accumulation volume of the CAN signal data is indeed too large, which causes a significant load on the performance of a traditional big data cluster: a large storage space, slow data retrieval and pulling, a large proportion of computing programs in resources, and the like. In an industrial intelligent big data scenario, the scope of related functions of data backhauled by a CAN signal is limited during each data analysis, and single analysis covers a narrow range of service contents of interest. However, a higher big data cluster load will be caused if the data backhauled by the CAN signal is retrieved, extracted, and cleaned from a full CAN signal data table during each pulling.

Therefore, the embodiments of the present application can classify, clean, store, and reuse massive industrial big data signals frequently uploaded using a data processing language on the basis of a big data warehouse technology through analysis of a data application scenario, exploration of data quality, generalization of data manifestations, and summarization of methods for aggregating, improving, and aligning data granularity.

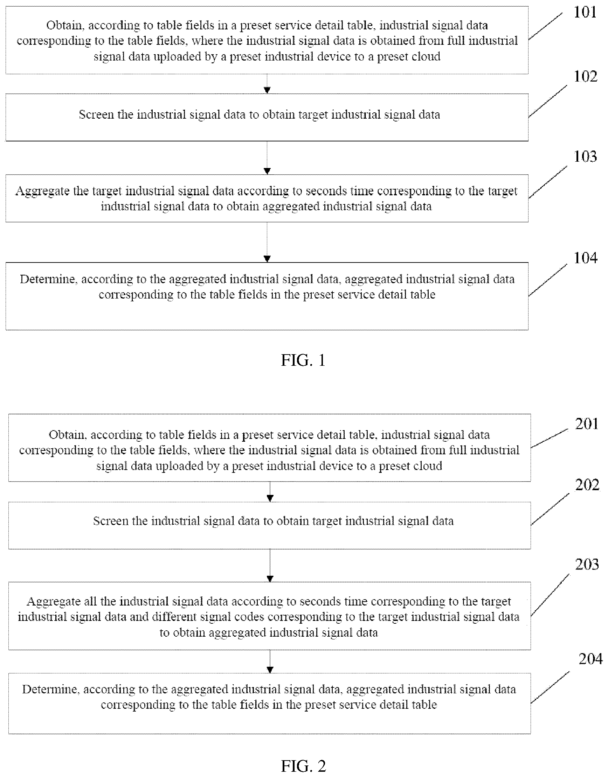

Referring to FIG. 1, a flowchart I of the steps of a data processing method according to an embodiment of the present application is shown. The method may include:
In step 101, industrial signal data corresponding to the table fields is obtained according to table fields in a preset service detail table, where the industrial signal data is obtained from full industrial signal data uploaded by a preset industrial device to a preset cloud.

Further, step 101 may include: a service function instruction sent by a user is received; the preset service detail table is generated according to the service function instruction, where the preset service detail table includes the table fields; the table fields include seconds time fields and data fields; one seconds time field corresponds to a plurality of data fields; and industrial signal data corresponding to the data fields is obtained according to the data fields from a preset acquisition signal matrix, where one data field corresponds to at least one piece of industrial signal data.

It should be noted that in the embodiments of the present application, the device transmits various kinds of full signal data to the preset cloud (a cloud server), and a big data cluster center can pull these full industrial signal data from the preset cloud. Therefore, the industrial signal data is obtained from the full industrial signal data uploaded by the preset industrial device to the preset cloud.

After initial industrial signal data is obtained, CAN signal data in a vehicle can be processed according to an actual need of a server to facilitate subsequent intelligent research. Therefore, a corresponding service domain is confirmed, thus determining a service detail table in advance. The service detail table includes actually required table fields. That is, the service detail table is modeled in advance according to an actual need or a service scenario.

Specifically, as shown in Table 1, Table 1 is an exemplary preset service detail table. It can be clearly seen that the table fields include a unique vehicle identifier, a time field, and a data field. The data field can be vehicle-related data, specifically, vehicle speed status, real fuel consumption, total odometer, driving mode, and the like. In addition, different data fields can be determined according to different service domains. The examples in the table are not unique.

**Table 1 Exemplary preset service detail table**

| Unique vehicle identifier | Time | Vehicle speed status | Real fuel consumption | Total odometer | Driving mode | Engine Status | Door lock status | Driving gear |
|---|---|---|---|---|---|---|---|---|
| \ | \ | \ | \ | \ | \ | \ | \ | \ |

In step 102, the industrial signal data is screened to obtain target industrial signal data.

Further, step 102 may include: the industrial signal data is screened according to a preset screening rule to obtain the target industrial signal data.

The preset screening rule includes: a value corresponding to the industrial signal data is a non null value, and a frequency corresponding to the industrial signal data is greater than a target threshold.

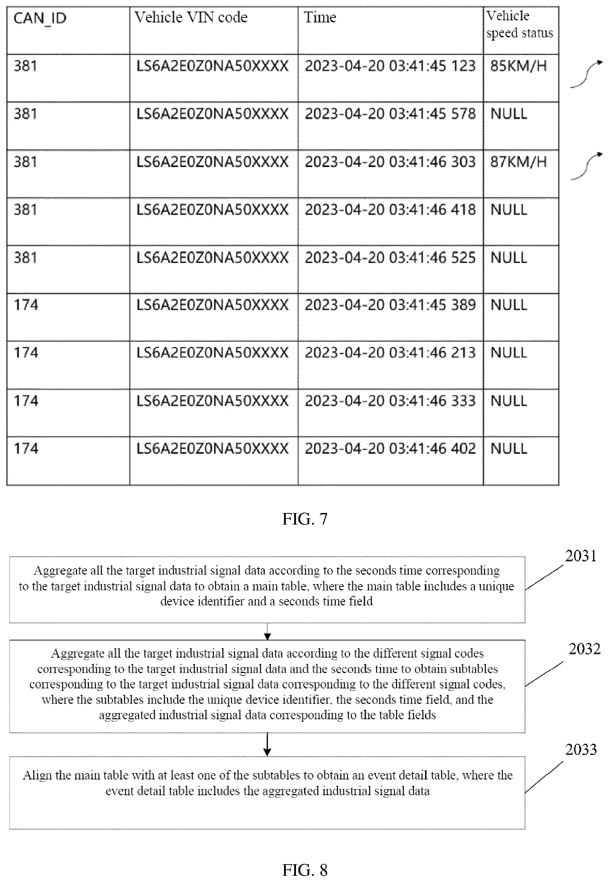

It should be noted that, as shown in FIG. 7, after the desired industrial signal data is determined and obtained, due to an extremely large amount of industrial signal data uploaded per second, the industrial signal data uploaded is mixed with a large amount of invalid information such as null values. Therefore, the original industrial signal data is first screened to obtain the screened target industrial signal data.

Specifically, screening can be achieved by presetting a screening rule. For example, the industrial signal data needs to meet the requirements that it is not NULL and values corresponding to different industrial signal data satisfy preset ranges corresponding to the different industrial signal data. Moreover, when the current industrial signal data is uploaded to a big data center or an automobile company center, the corresponding frequency is greater than the target threshold. The original industrial signal data is screened by setting the screening rule, it can ensure that part of redundant information is culled out.

In step 103, the target industrial signal data is aggregated according to seconds time corresponding to the target industrial signal data to obtain aggregated industrial signal data.

Further, the seconds time is captured from a milliseconds time character string corresponding to the industrial signal data and corresponds to a seconds unit.

It should be noted that in the embodiments of the present application, after the original industrial signal data is screened, some invalid information mixed with null values can be eliminated. Further, since the same functional information may be data uploaded by different industrial signals, a higher big data cluster load will be caused if the data backhauled by the industrial signals is retrieved, extracted, and cleaned from a full industrial signal data table during each pulling.

Therefore, in the present application, a plurality of pieces of industrial signal data per second are aggregated in seconds till only one piece of data is generated per second. For specific details, refer to the subsequent discussion.

In step 104, aggregated industrial signal data corresponding to the table fields in the preset service detail table is determined according to the aggregated industrial signal data.

It should be noted that in the embodiments of the present application, after the target industrial signal data is aggregated in step 103, the aggregated industrial signal data can ultimately be obtained. Therefore, the aggregated industrial signal data can be filled into the preset service detail table to obtain the final detail table that meets the requirements of the service scenario and is subj ected to aggregation in second. The table can clearly and intuitively show the aggregated vehicle-related data corresponding to a second unit.

Specifically, as shown in Table 2, Table 2 is an example aggregated preset service detail table, which can clearly show that the 45th second and the 46th second correspond to a plurality of pieces of CAN data, respectively.

**Table 2 Exemplary preset service detail table generated by aggregation**

| Unique vehicle identifier | Time | Vehicle speed status | Real fuel consumption | Total odometer | Driving mode | Engine status | Door lock status | Driving gear |
|---|---|---|---|---|---|---|---|---|
| LS6A2E0Z0 NA50XXXX | 2023-04-20 | 86 KM/H | 5.7 L/100 KM | 25469.7 KM | Sports | Start | Lock ed | Null |
| | 03:41:45 | | | | | | | |
| LS6A2E0Z0 NA50XXXX | 2023-04-20 | 87 KM/H | 5.7 L/100 KM | Null | Null | Start | Null | Power gear |
| | 03:41:46 | | | | | | | |

By aggregation, full data storage can be transformed into service detail table storage that meets the requirements of the service scenario, which reduces the influence of redundant data on data processing. This is suitable for reducing a load of the data on hardware, improving the data application efficiency, and generating higher value from the industrial data.

The data processing method provided by the embodiments of the present application includes: obtaining, according to table fields in a preset service detail table, industrial signal data corresponding to the table fields, where the industrial signal data is obtained from full industrial signal data uploaded by a preset industrial device to a preset cloud; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. That is, by screening the acquired industrial signal data, the present application can preliminarily optimize original full data and retain the industrial signal data that meets a requirement and quality, and the target industrial signal data is further aggregated according to the seconds time to obtain the aggregated industrial signal data, which can cull out redundant data in a plurality of pieces of data per second, so that valid data can be retained, and redundant unrelated and invalid data can be eliminated; the overall data granularity retention is improved; and a less-for-more data service requirement is met.

In addition, the signal data processed by the data processing method in the embodiments of the present application can be applied to a subsequent service scenario. For example, for data analysis, low-quality data can be eliminated in advance. Furthermore, measured in seconds, only one piece of data can be generated per second, which ensures that a piece of data corresponding to each second is all data required for the service scenario.

Therefore, due to measurement in seconds, the data processing method in the embodiments of the present application can generate only one piece of data per second, and ensure that a piece of data corresponding to each second is all the data required for the service scenario, thereby significantly reducing the storage costs and saving computing resources. By cleaning and screening the signal data, the data quality can be improved; and the transmission costs can be greatly reduced during subsequent calling of the signal data.

Referring to FIG. 2, a flowchart II of the steps of a data processing method according to an embodiment of the present application is shown. The method may include:
In step 201, industrial signal data corresponding to the table fields is obtained according to table fields in a preset service detail table, where the industrial signal data is obtained from full industrial signal data uploaded by a preset industrial device to a preset cloud.

In step 202, the industrial signal data is screened to obtain target industrial signal data.

It should be noted that step 201 to step 202 described above refer to the foregoing discussion, and will not be elaborated here.

In step 203, all the industrial signal data is aggregated according to seconds time corresponding to the target industrial signal data and different signal codes corresponding to the target industrial signal data to obtain aggregated industrial signal data.

The signal codes are classified according to functional categories corresponding to the target industrial signal data.

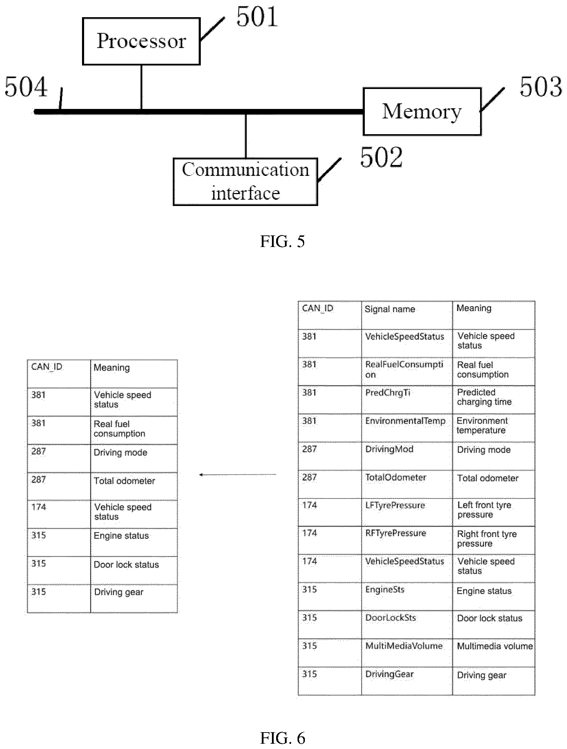

It should be noted that as shown in FIG. 6, the embodiments of the present application can determine the corresponding target industrial signal data through a CAN-ID (a signal code corresponding to a CAN signal).

Further, as shown in FIG. 8, step 203 can include:
In step 2031, all the target industrial signal data is aggregated according to the seconds time corresponding to the target industrial signal data to obtain a main table, where the main table includes a unique device identifier and a seconds time field.

It should be noted that in the embodiments of the present application, in the data aggregation section, after acquisition signals to be extracted corresponding to which functional data, namely, the target industrial signal data, are determined, the data aggregation can be achieved by writing data warehouse Structured Query Language (SQL) codes. The unique device identifier is unique identifier information corresponding to an industrial device that transmits an industrial signal. Exemplarily, vehicle CAN signal transmission is taken as an example. The main table can be obtained by extracting and aggregating second dimensions uploaded by relevant vehicle signals in unit of a single unique vehicle identifier.

It should be noted that for the aggregation in second, the industrial signal is generally transmitted in millisecond that is the smallest unit to transmit a large amount of signal data. Therefore, a large amount of null value information within a millisecond can be removed through the aggregation in second.

Specifically, Table 3 is an exemplary main table. As shown in Table 3 below, it is evident that the table fields in the main table include a unique vehicle identifier and a seconds time field.

**Table 3 Exemplary main table**

| Unique vehicle identifier | Time |
|---|---|
| LS6A2E0Z0N | 2023-04-20 |
| A50XXXX | 03:41:45 |
| LS6A2E0Z0NA50XXXX | 2023-04-20 |
| | 03:41:46 |

In step 2032, all the target industrial signal data is aggregated according to the different signal codes corresponding to the target industrial signal data and the seconds time to obtain subtables corresponding to the target industrial signal data corresponding to the different signal codes, where the subtables include the unique device identifier, the seconds time field, and the aggregated industrial signal data corresponding to the table fields.

It should be noted that the signal codes refer to different IDs of set numbers of industrial signals or corresponding signal channels, to distinguish signals. In the embodiments of the present application, a CAN signal is taken as an example. A signal code corresponding to the CAN signal is CAN-ID. Therefore, after the main table is determined, all the target CAN data is aggregated according to the signal encode (namely, the ID of the CAN signal) and the seconds time to obtain non null data corresponding to all seconds times corresponding to each signal code.

Further, step 2032 includes the following steps: all the target industrial signal data is classified according to the signal codes to obtain a plurality of pieces of the target industrial signal data corresponding to the different signal codes; and in a case that it is detected that a second piece of target industrial signal data corresponding to any signal code in the same seconds time field is a non null value and a first piece of target industrial signal data is a null value, or in a case that a second piece of target industrial signal data corresponding to the same signal code in the same seconds time field is a null value and a first piece of target industrial signal data is a non null value, the non null value corresponding to the first piece of target industrial signal data and the non null value corresponding to the second piece of target industrial signal data are aggregated according to the seconds time to obtain the subtables corresponding to the target industrial signal data corresponding to the signal code, where the subtables include the signal code, the unique device identifier, the seconds time field, and a data field.

It should be noted that all the target industrial signal data can be classified according to the signal codes. For example, if signal codes CAN-ID include 381, 287, and 315, 381 is taken as an example. Specifically, as shown in Table 4, Table 4 is an exemplary subtable before aggregation. The signal code 381 is taken as an example. It can be clearly seen that in step 204, firstly, the target industrial signal data can be classified into different groups of data according to the different signal codes. Each group of data corresponds to the same signal code. Then, on the premise of the same signal code, the aggregation in second is performed.

**Table 4 Exemplary subtable before aggregation**

| Signal code | Unique vehicle identifier | Time | Vehicle speed status | Real fuel consumption |
|---|---|---|---|---|
| 381 | LS6A2E0Z0NA50XXXX | 2023-04-20 | 85 KM/H | Null |
| | | 03:41:45 123 | | |
| 381 | LS6A2E0Z0NA50XXXX | 2023-04-20 | Null | 5.7 L/100 KM |
| | | 03:41:45 578 | | |
| 381 | LS6A2E0Z0NA50XXXX | 2023-04-20 | 87 KM/H | Null |
| | | 3:41:46 303 | | |
| 381 | LS6A2E0Z0NA50XXXX | 2023-04-20 | Null | 5.7 L/100 KM |
| | | 3:41:46 418 | | |

As shown in Table 5, Table 5 is an exemplary subtable after aggregation. It can be clearly seen that on the premise of the same signal code, after the aggregation in second, CAN data of the vehicle without null values within the seconds time is obtained.

**Table 5 Exemplary subtable after aggregation**

| Signal code | Unique vehicle identifier | Time | Vehicle speed status | Real fuel consumption |
|---|---|---|---|---|
| 381 | LS6A2E0Z0NA50XXXX | 2023-04-20 | 85 KM/H | 5.7 L/100 KM |
| | | 03:41:45 | | |
| 381 | LS6A2E0Z0NA50XXXX | 2023-04-20 | 87 KM/H | 5.7 L/100 KM |
| | | 03:41:46 | | |

In the same way, the target industrial signal data can be classified into different groups according to the different signal codes, and each group of data is processed using the same method as mentioned above.

Further, all the target industrial signal data is classified according to the signal codes to obtain a plurality of pieces of the target industrial signal data corresponding to the different signal codes, which includes: all the target industrial signal data is classified according to the signal codes to obtain a plurality of groups of target industrial signal data, where each group of target industrial signal data corresponds to one signal code; and the first piece of target industrial signal data or the last piece of target industrial signal data sequenced on the basis of milliseconds time is selected from each group of target industrial signal data as the target industrial signal data corresponding to the different signal codes.

It should be noted that during the extraction of the data in the seconds time, each functional signal selects, according to an actual service or scenario requirement, data that a user follows, such as the first or last piece of data within the seconds time.

Therefore, in the embodiments of the present application, for the subtable, all the target industrial signal data is first classified and then aggregated according to the signal codes. The advantage of classifying all the signal data is to improve the data processing efficiency, that is, multiple threads are synchronized. Meanwhile, normal operation of a data processing program is ensured under limited resources in a big data scenario, which reduces the influence of the processing of a large amount of data on a system.

In step 2033, the main table is aligned with at least one of the subtables to obtain an event detail table, where the event detail table includes the aggregated industrial signal data.

It should be noted that in the embodiments of the present application, after the main table and at least one subtable are determined, each subtable corresponds to only one signal code and one unique device identifier.

Therefore, the unique vehicle identifier and the seconds time field are used as association conditions according to the main table taking the unique device identifier (for example, the unique vehicle identifier) and the time (second) as granularities, so as to associate the subtables with aggregation results of the acquisition signals (for example, the CAN signals) corresponding to different signal codes. The target industrial signal data of the subtables corresponding to the various industrial signals will coexist side by side within the same industrial device (for example, the vehicle) and the seconds time. Specifically, if there is signal data uploaded by the device within this second, this piece of result data will show the signal data, so that a result table that takes the industrial device and the seconds time as the granularities and carries various acquisition signal data is obtained. The result table can be directly used as an event detail table of a related subject domain without eliminating null values. The related subject domain is a different service domain, for example, intelligent driving corresponding to the vehicle and human-vehicle interaction.

Thus, because only a device with data uploaded and the seconds time will appear in the event detail table, that is, because all data rows have at least one piece of data information uploaded by the acquisition signal, lots of computing resources used for eliminating null values can be saved.

In step 204, aggregated industrial signal data corresponding to the table fields in the preset service detail table is determined according to the aggregated industrial signal data.

It should be noted that step 204 described above refer to the foregoing discussion, and will not be elaborated here.

The data processing method provided by the embodiments of the present application includes: obtaining, according to table fields in a preset service detail table, industrial signal data corresponding to the table fields, where the industrial signal data is obtained from full industrial signal data uploaded by a preset industrial device to a preset cloud; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. That is, by screening the acquired industrial signal data, the present application can preliminarily optimize original full data and retain the industrial signal data that meets a requirement and quality, and the target industrial signal data is further aggregated according to the seconds time to obtain the aggregated industrial signal data, which can cull out redundant data in a plurality of pieces of data per second, so that valid data can be retained, and redundant unrelated and invalid data can be eliminated; the overall data granularity retention is improved; and a less-for-more data service requirement is met.

In addition, the signal data processed by the data processing method in the embodiments of the present application can be applied to a subsequent service scenario. For example, for data analysis, low-quality data can be eliminated in advance. Furthermore, measured in seconds, only one piece of data can be generated per second, which ensures that a piece of data corresponding to each second is all data required for the service scenario.

Therefore, due to measurement in seconds, the data processing method in the embodiments of the present application can generate only one piece of data per second, and ensure that a piece of data corresponding to each second is all the data required for the service scenario, thereby significantly reducing the storage costs and saving computing resources. By cleaning and screening the signal data, the data quality can be improved; and the transmission costs can be greatly reduced during subsequent calling of the signal data.

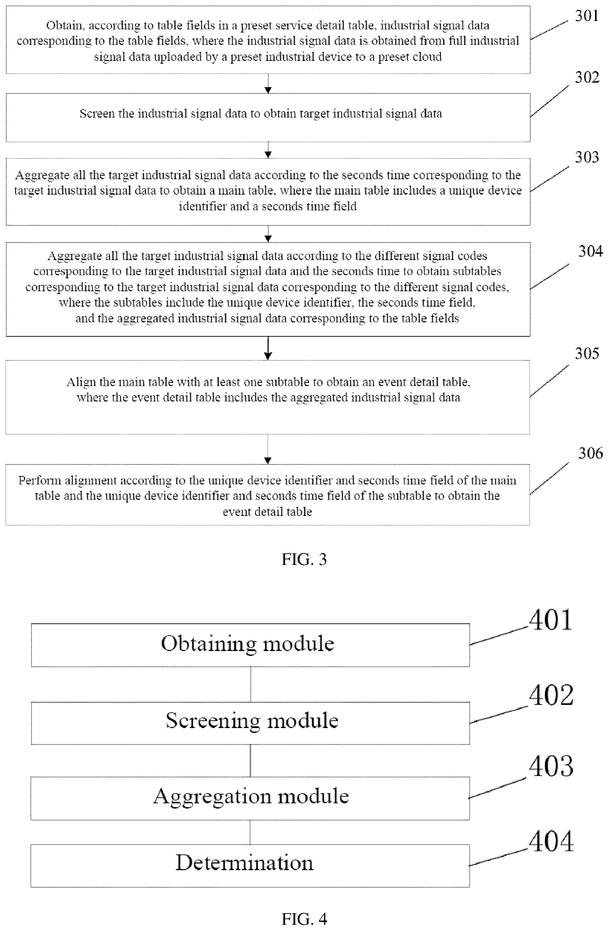

Referring to FIG. 3, a flowchart III of the steps of a data processing method according to an embodiment of the present application is shown. The method may include:
In step 301, industrial signal data corresponding to the table fields is obtained according to table fields in a preset service detail table, where the industrial signal data is obtained from full industrial signal data uploaded by a preset industrial device to a preset cloud.

In step 302, the industrial signal data is screened to obtain target industrial signal data.

In step 303, all the target industrial signal data is aggregated according to the seconds time corresponding to the target industrial signal data to obtain a main table, where the main table includes a unique device identifier and a seconds time field.

In step 304, all the target industrial signal data is aggregated according to the different signal codes corresponding to the target industrial signal data and the seconds time to obtain subtables corresponding to the target industrial signal data corresponding to the different signal codes, where the subtables include the unique device identifier, the seconds time field, and the aggregated industrial signal data corresponding to the table fields.

It should be noted that step 301 to step 304 described above refer to the foregoing discussion, and will not be elaborated here.

In step 305, the unique device identifier and seconds time field in the main table are aligned with the unique device identifier and seconds time field in the subtable to obtain an event detail table, where the event detail table includes the aggregated industrial signal data.

It should be noted that in the embodiments of the present application, after the main table taking the unique device identifier and the time (second) as granularities is obtained in step 303, the unique vehicle identifier and the seconds time field are used as association conditions according to the main table, so as to associate the subtables with aggregation results of the acquisition signals (the CAN data). The data of the various subtables will coexist side by side within the same device and the seconds time. If there is signal data uploaded by the device within this second, this piece of result data will show the signal data, so that the event detail table that takes the device and the seconds time as the granularities and carries various acquisition signal data is obtained.

The generated event detail table can be directly used as a detail table of a related subject domain without eliminating null values. Because only a vehicle with data uploaded and the corresponding seconds time will appear in the data table, that is, because all data rows have at least one piece of data information uploaded by the acquisition signal, lots of computing resources used for eliminating null values are saved.

In step 306, aggregated industrial signal data corresponding to the table fields in the preset service detail table is determined according to the aggregated industrial signal data.

It should be noted that step 306 described above refer to the foregoing discussion, and will not be elaborated here.

The data processing method provided by the embodiments of the present application includes: obtaining, according to table fields in a preset service detail table, industrial signal data corresponding to the table fields, where the industrial signal data is obtained from full industrial signal data uploaded by a preset industrial device to a preset cloud; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. That is, by screening the acquired industrial signal data, the present application can preliminarily optimize original full data and retain the industrial signal data that meets a requirement and quality, and the target industrial signal data is further aggregated according to the seconds time to obtain the aggregated industrial signal data, which can cull out redundant data in a plurality of pieces of data per second, so that valid data can be retained, and redundant unrelated and invalid data can be eliminated; the overall data granularity retention is improved; and a less-for-more data service requirement is met.

Referring to FIG. 4, FIG. 4 is a data processing apparatus according to an embodiment of the present application. The apparatus includes:
an obtaining module 401, configured to obtain, according to table fields in a preset service detail table, industrial signal data corresponding to the table fields, where the industrial signal data is obtained from full industrial signal data uploaded by a preset industrial device to a preset cloud;
a screening module 402, configured to screen the industrial signal data to obtain target industrial signal data;
an aggregation module 403, configured to aggregate the target industrial signal data according to seconds time corresponding to the target industrial signal data to obtain aggregated industrial signal data; and
a determination module 404, configured to determine, according to the aggregated industrial signal data, aggregated industrial signal data corresponding to the table fields in the preset service detail table.

The data processing method provided by the embodiments of the present application includes: obtaining, according to table fields in a preset service detail table, industrial signal data corresponding to the table fields, where the industrial signal data is obtained from full industrial signal data uploaded by a preset industrial device to a preset cloud; screening the industrial signal data to obtain target industrial signal data; aggregating the target industrial signal data according to seconds time corresponding to the target industrial signal data to obtain aggregated industrial signal data; and determining, according to the aggregated industrial signal data, aggregated industrial signal data corresponding to the table fields in the preset service detail table. That is, by screening the acquired industrial signal data, the present application can preliminarily optimize original full data and retain the industrial signal data that meets a requirement and quality, and the target industrial signal data is further aggregated according to the seconds time to obtain the aggregated industrial signal data, which can cull out redundant data in a plurality of pieces of data per second, so that valid data can be retained, and redundant unrelated and invalid data can be eliminated; the overall data granularity retention is improved; and a less-for-more data service requirement is met.

The embodiments of the present application further provide a communication device, as shown in FIG. 5, including a processor 501, a communication interface 502, a memory 503, and a communication bus 504, where the processor 501, the communication interface 502, and the memory 503 complete mutual communications through the communication bus 504.

The memory 503 is configured to store a computer program.

The processor 501 is configured to execute the program stored on the memory 503 to implement the following steps:
obtaining, according to table fields in a preset service detail table, industrial signal data corresponding to the table fields, where the industrial signal data is obtained from full industrial signal data uploaded by a preset industrial device to a preset cloud;
screening the industrial signal data to obtain target industrial signal data;
aggregating the target industrial signal data according to seconds time corresponding to the target industrial signal data to obtain aggregated industrial signal data; and
determining, according to the aggregated industrial signal data, aggregated industrial signal data corresponding to the table fields in the preset service detail table.

The communication bus mentioned by the above terminal can be either a Peripheral Component Interconnect (PCI) bus or an Extended Industry Standard Architecture (EISA) bus. The communication bus may be classified into an address bus, a data bus, a control bus, and the like. For ease of representation, only one thick line is used in the figure, but it does not mean that there is only one bus or one type of bus.

The communication interface is configured to achieve communication between the above terminal and another device.

The memory may include a random access memory (RAM), and may further include a non-volatile memory, such as at least one disk memory. Optionally, the memory can also be a storage apparatus located away from the foregoing processor.

The foregoing processor may be a general purpose processor, a central processing unit (CPU), a network processor (NP), a digital signal processor (DSP), an application specific integrated circuit (ASIC), a field-programmable gate array (FPGA), or another programmable logical device, discrete gate, transistor logical device, and discrete hardware component.

Another embodiment provided in the present application further provides a computer-readable storage medium. The computer-readable storage medium stores instructions. The instructions, when run on a computer, cause the computer to perform any one of the data processing methods described in the above embodiments.

Still another embodiment of the present application further provides a computer program product including instructions. When the computer program product is run on a computer, the computer is caused to perform any one of the data processing methods described in the above embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to the embodiments of the present application are all or partially generated. The computer may be a general-purpose computer, a special-purpose computer, a computer network, or other programmable apparatuses. The computer instructions may be stored in a computer-readable storage medium or may be transmitted from one computer-readable storage medium to another computer-readable storage medium. For example, the computer instructions may be transmitted from a website, a computer, a server, or a third database to another website, computer, server, or third database in a wired manner (for example, by using a coaxial cable, an optical fiber, or a digital subscriber line (DSL)) or a wireless (for example, infrared, radio, or microwave) manner. The computer-readable storage medium may be any usable medium accessible by the computer, or a data storage device, for example, a server or a third database, integrating one or more usable media. The usable medium may be a magnetic medium (for example, a floppy disk, a hard disk, or a magnetic tape), an optical medium (for example, DVD), a semiconductor medium (for example, Solid State Disk (SSD)), or the like.

It should be noted that in this document, relationship terms such as first are used solely to distinguish one entity or operation from another entity or operation without necessarily requiring or implying any actual such relationship or order between such entities or operations. Furthermore, the terms "include", "comprise", or any other variations thereof, are intended to encompass a non-exclusive inclusion, such that a process, method, article, or device that includes a list of elements does not include only those elements but may include other elements not explicitly listed or inherent to such process, method, article, or device. Without further limitation, an element defined by the phrase "including a/an... " does not exclude the presence of another identical elements in the process, method, article or device that includes the element.

The various embodiments in this specification are described in relevant ways, and the same and similar parts between the various embodiments can be referred to each other. Each embodiment focuses on differences from other embodiments. Particularly, the system embodiment is basically similar to the method embodiment, and therefore is described briefly. For related parts, refer to some of the descriptions in the method embodiment.

The above embodiments are only the preferred embodiments provided to fully illustrate the present disclosure, and the protection scope of the present disclosure is not limited thereto. Any equivalent substitutions or transformations made by those skilled in the art on the basis of the present disclosure shall fall within the protection scope of the present disclosure.

## Claims

1. A data processing method, wherein the data processing method comprises:
obtaining, according to table fields in a preset service detail table, industrial signal data corresponding to the table fields, wherein the industrial signal data is obtained from full industrial signal data uploaded by a preset industrial device to a preset cloud;
screening the industrial signal data to obtain target industrial signal data;
aggregating the target industrial signal data according to seconds time corresponding to the target industrial signal data to obtain aggregated industrial signal data; and
determining, according to the aggregated industrial signal data, aggregated industrial signal data corresponding to the table fields in the preset service detail table.

2. The data processing method according to claim 1, wherein the aggregating the target industrial signal data according to seconds time corresponding to the target industrial signal data to obtain aggregated industrial signal data comprises:
aggregating all the industrial signal data according to the seconds time corresponding to the target industrial signal data and different signal codes corresponding to the target industrial signal data to obtain the aggregated industrial signal data.

3. The data processing method according to claim 2, wherein the signal codes are classified according to functional categories corresponding to the target industrial signal data.

4. The data processing method according to claim 2, wherein the aggregating all the industrial signal data according to the seconds time corresponding to the target industrial signal data and different signal codes corresponding to the target industrial signal data to obtain the aggregated industrial signal data comprises:
aggregating all the target industrial signal data according to the seconds time corresponding to the target industrial signal data to obtain a main table, wherein the main table comprises a unique device identifier and a seconds time field;
aggregating all the target industrial signal data according to the different signal codes corresponding to the target industrial signal data and the seconds time to obtain subtables corresponding to the target industrial signal data corresponding to the different signal codes, wherein the subtables comprise the unique device identifier, the seconds time field, and the aggregated industrial signal data corresponding to the table fields; and
aligning the main table with at least one of the subtables to obtain an event detail table, wherein the event detail table comprises the aggregated industrial signal data.

5. The data processing method according to claim 4, wherein the aggregating all the target industrial signal data according to the different signal codes corresponding to the target industrial signal data and the seconds time to obtain subtables corresponding to the target industrial signal data corresponding to the different signal codes comprises:
classifying all the target industrial signal data according to the signal codes to obtain a plurality of pieces of the target industrial signal data corresponding to the different signal codes; and
in a case that it is detected that a second piece of target industrial signal data corresponding to any signal code in the same seconds time field is a non null value and a first piece of target industrial signal data is a null value, or in a case that a second piece of target industrial signal data corresponding to the same signal code in the same seconds time field is a null value and a first piece of target industrial signal data is a non null value, aggregating the non null value corresponding to the first piece of target industrial signal data and the non null value corresponding to the second piece of target industrial signal data according to the seconds time to obtain the subtables corresponding to the target industrial signal data corresponding to the signal code, wherein the subtables comprise the signal code, the unique device identifier, the seconds time field, and a data field.

6. The data processing method according to claim 5, wherein the classifying all the target industrial signal data according to the signal codes to obtain a plurality of pieces of the target industrial signal data corresponding to the different signal codes comprises:
classifying all the target industrial signal data according to the signal codes to obtain a plurality of groups of target industrial signal data, wherein each group of target industrial signal data corresponds to one signal code; and
selecting, from each group of target industrial signal data, the first piece of target industrial signal data or the last piece of target industrial signal data sequenced on the basis of milliseconds time as the target industrial signal data corresponding to the different signal codes.

7. The data processing method according to claim 5, wherein the aligning the main table with at least one of the subtables to obtain an event detail table comprises:
aligning the unique device identifier and seconds time field in the main table with the unique device identifier and seconds time field in the subtable to obtain the event detail table.

8. The data processing method according to claim 1, wherein the obtaining, according to table fields in a preset service detail table, industrial signal data corresponding to the table fields comprises:
receiving a service function instruction sent by a user;
generating the preset service detail table according to the service function instruction, wherein the preset service detail table comprises the table fields; the table fields comprise seconds time fields and data fields; one seconds time field corresponds to a plurality of data fields; and
obtaining, according to the data fields from a preset acquisition signal matrix, industrial signal data corresponding to the data fields, wherein one data field corresponds to at least one piece of industrial signal data.

9. The data processing method according to claim 1, wherein the screening the industrial signal data to obtain target industrial signal data comprises:
screening the industrial signal data according to a preset screening rule to obtain the target industrial signal data.

10. The data processing method according to claim 9, wherein the preset screening rule comprises: a value corresponding to the industrial signal data is a non null value, and a frequency corresponding to the industrial signal data is greater than a target threshold.

11. The data processing method according to claim 1, wherein the seconds time is captured from a milliseconds time character string corresponding to the industrial signal data and corresponds to a seconds unit.

12. A data processing apparatus, wherein the data processing apparatus comprises:
an obtaining module, configured to obtain, according to table fields in a preset service detail table, industrial signal data corresponding to the table fields, wherein the industrial signal data is obtained from full industrial signal data uploaded by a preset industrial device to a preset cloud;
a screening module, configured to screen the industrial signal data to obtain target industrial signal data;
an aggregation module, configured to aggregate the target industrial signal data according to seconds time corresponding to the target industrial signal data to obtain aggregated industrial signal data; and
a determination module, configured to determine, according to the aggregated industrial signal data, aggregated industrial signal data corresponding to the table fields in the preset service detail table.

13. A communication device, comprising: a transceiver, a memory, a processor, and a program stored on the memory and runnable on the processor, wherein
the processor is configured to read the program in the memory to implement the data processing method according to any one of claims 1 to 11.

14. A readable storage medium, configured to storage a program, wherein the program, when executed by a processor, implements the data processing method according to any one of claims 1 to 11.

15. A vehicle, wherein the vehicle is provided with the data processing apparatus according to claim 12.
